# FASCICULE DE BREVET EUROPEEN

(11) **EP 1 335 284 B1**
(45) Date de publication et mention de la délivrance du brevet: **01.04.2009**
(21) Numéro de dépôt: 03075216.6
(22) Date de dépôt: 23.01.2003
(51) Int. Cl.: G06F 9/45, G06F 9/445

(54) **Procédé de traitement de fichiers binaires de programmes**
Verfahren zur Bearbeitung von binären Programmdateien
Method to treat binary program files

(30) Priorité: 30.01.2002 FR 0201085
(43) Date de publication de la demande: 13.08.2003
(73) Titulaire: NXP B.V., 5656 AG Eindhoven (NL)
(72) Inventeur: Lafage, Thierry, Société Civile S.P.I.D., 75008 Paris (FR); Plagne, Géraud, Société Civile S.P.I.D., 75008 Paris (FR)
(74) Mandataire: Williamson, Paul Lewis

(56) Documents cités:
- EP-A- 0 866 612
- EP-A- 1 168 721
- WO-A-00/23887
- WO-A-00/46664
- US-A- 5 718 632
- US-A- 5 819 067

## Description

### Domaine technique de l'invention

La présente invention concerne un procédé de traitement de fichiers binaires de programmes comprenant une étape de transfert d'un fichier binaire de programme sous la forme de paquets de données binaires sur un réseau de communication entre un dispositif d'émission d'une plate-forme serveur et un dispositif de réception d'une plate-forme cliente, appelée par la suite plate-forme cible.

Elle concerne également un dispositif de traitement de données apte à recevoir des fichiers binaires de programme émis sur un réseau de communication sous la forme de paquets de données binaires par un dispositif d'émission d'une plate-forme serveur.

Elle trouve notamment son application dans la traduction binaire de fichiers binaires de programmes compilés pour une plate-forme source en des fichiers binaires de programmes compilés pour une plate-forme cible, une plate-forme source étant par exemple une console de jeux, et une plate-forme cible étant par exemple un récepteur-décodeur de télévision numérique (en anglais 'set-top-box'), un assistant numérique personnel ou un téléphone mobile.

### Etat de la technique antérieure

Le téléchargement d'un fichier binaire de programme compilé pour une plate-forme source via un réseau de communication, en vue de son exécution sur une plate-forme cible différente se décompose en trois étapes principales :
- le téléchargement proprement dit du fichier binaire de programme, à partir du réseau de communication,
- la traduction binaire du fichier binaire de programme afin d'en donner une version compilée pour la plate-forme cible, et
- l'exécution du fichier binaire de programme ainsi traduit.

Le document EP-A-1 168 721 décrit un procédé de transfert d'un fichier binaire entre un dispositif d'émission et un dispositif de réception via un réseau à commutation de paquets, procédé comprenant une étape de ré-ordonnancement des paquets reçus.

Le brevet US 5,819,067 propose d'utiliser un système à deux processeurs pour la traduction binaire et l'exécution d'un fichier binaire de programme. Un processeur est dédié à la traduction binaire, l'autre à l'exécution du fichier binaire programme traduit. Le premier processeur commence par traduire une première page du fichier binaire programme. Puis il traduit une deuxième page, et pendant ce temps, le second processeur exécute la première page. Ce système permet ainsi d'exécuter le fichier binaire de programme au fur et à mesure qu'il est traduit.

Malgré cela, le fichier binaire de programme peut occuper un espace mémoire important, allant de quelques centaines de kilo-octets à quelques dizaines de méga-octets. Par conséquent, le téléchargement via le réseau de communication peut prendre de nombreuses minutes et l'utilisateur doit attendre un long moment avant que le fichier binaire programme soit utilisable.

### Exposé de l'invention

La présente invention a pour but de proposer un procédé de traitement de fichiers binaires de programmes qui soit plus rapide.

A cet effet, le procédé de traitement de fichiers binaires de programmes de l'invention est défini par la revendication 1.

La présente invention permet de commencer le traitement du fichier binaire de programme, ce traitement étant par exemple une traduction binaire, dès qu'une portion de code a été identifiée. Ainsi, le téléchargement du fichier binaire de programme d'une part et le traitement du fichier binaire de programme, la traduction binaire et l'exécution du fichier binaire de programme par exemple, par le dispositif de réception d'autre part sont effectués selon un principe de pipeline. Le procédé de traitement de fichiers binaires de programmes permet par conséquent de traiter plus rapidement les fichiers binaires de programmes que l'état de la technique antérieure, ceci pour un plus grand confort de l'utilisateur.

La présente invention concerne également un dispositif de traitement de données apte à recevoir des fichiers binaires de programmes et à mettre en oeuvre le procédé de traitement de fichiers binaires de programmes, dans un circuit intégré par exemple, à l'aide de moyens matériels (en anglais'hardware') ou logiciels (en anglais'software').

### Brève description des dessins

Ces aspects de l'invention ainsi que d'autres aspects plus détaillés apparaîtront plus clairement grâce à la description suivante de plusieurs modes de réalisation de l'invention, donnés à titre d'exemples non limitatifs et en regard des dessins annexés parmi lesquels :
- la Fig. 1 représente un système de communication de fichiers binaires de programmes selon l'invention, et
- la Fig. 2 représente un diagramme temporel des différentes étapes du procédé de traitement de fichiers binaires de programmes selon l'invention.

### Exposé détaillé d'au moins un mode de réalisation de l'invention

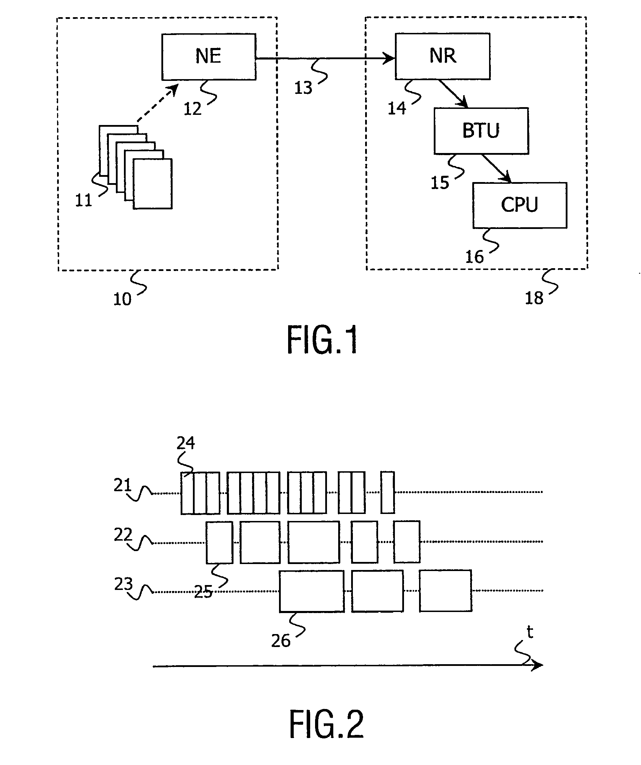

La présente invention concerne un système de communication entre une plate-forme serveur et une plate-forme cible, comme illustré à la Fig. 1. La plate-forme cible est par exemple un récepteur-décodeur de télévision numérique, un ordinateur personnel, un assistant numérique personnel ou un téléphone mobile. Ledit système est apte à transférer des fichiers binaires de programmes d'un dispositif d'émission NE (12) du serveur (10) vers un dispositif de réception (14) de la plate-forme cible (18) via un réseau de communication (13). La plate-forme cible comporte des moyens de traduction binaire BTU (15) aptes à traduire le fichier binaire de programme (11) émis par le serveur en un fichier binaire de programme exécutable sur la plate-forme cible, i.e. compilé selon le système d'exploitation et/ou le processeur CPU (16) de ladite plate-forme.

La présente invention consiste à commencer la traduction binaire et l'exécution du fichier binaire de programme transféré aussitôt que possible sans attendre la fin du transfert dudit fichier. Elle est basée sur le fait que les fichiers sont transférés paquets par paquets dans les réseaux de communication fonctionnant selon les protocoles TCP/IP (de l'anglais Transmission Control Protocol / Internet Protocol), les deux protocoles de communication qui forment les fondements de l'Internet. Ainsi, une partie du contenu d'un fichier binaire de programme transféré est disponible avant que le transfert de l'ensemble du fichier binaire de programme ne soit achevé. A cet effet, le procédé de traitement de fichiers binaires de programmes selon l'invention comprend les trois étapes principales dont le déroulement en fonction du temps (t) est illustré à la Fig. 2.

Durant une première étape (21), un fichier binaire choisi par un utilisateur de la plate-forme cible est transféré, paquets par paquets, les paquets (24) pouvant être de taille différente, du dispositif d'émission de la plate-forme serveur vers le dispositif de réception de la plate-forme cible via le réseau de communication. Le protocole de transfert utilisé est de préférence le protocole FTP (de l'anglais'File Transfer Protocol'). Ce peut être également le protocole HTTP (de l'anglais 'HyperText Transfer Protocol').

Lors d'une seconde étape (22), les moyens de traduction binaire BTU (15) commencent à traiter le fichier binaire de programme dès que le premier paquet de données envoyé par le serveur est arrivé. Pour cela, la plate-forme cible comprend des moyens de stockage, une mémoire ou un disque dur par exemple, aptes à stocker les paquets de données et les moyens de traduction binaires sont aptes à aller lire le contenu des moyens de stockage périodiquement selon un principe connu de l'homme du métier.

Le dispositif de réception de la plate-forme cible selon l'invention est apte à lire les paquets au fur et à mesure de leur arrivée. Comme le protocole de transfert de fichiers FTP ne requiert pas que les paquets arrivent dans le même ordre que celui dans lequel ils ont été envoyés, le dispositif de réception comprend en outre des moyens de ré-ordonnancement aptes à réordonner les paquets par groupe de paquets ordonnés (25), la taille de ces paquets dépendant de l'ordre d'arrivée des paquets. Afin d'optimiser le procédé de traitement de fichiers binaires de programmes, les moyens de ré-ordonnancement transmettent de préférence les plus petits groupes de paquets réordonnés possible. Il apparaîtra cependant à l'homme du métier que les paquets peuvent également arriver directement dans l'ordre comme, par exemple, dans le cas du protocole de transfert IPv6. Dans ce cas, les moyens de ré-ordonnancement ont pour rôle de s'assurer que les paquets sont bien reçus dans l'ordre.

Lorsque le premier paquet de données envoyé par le dispositif d'émission est stocké dans les moyens de stockage, le premier groupe de paquets, comprenant le premier paquet et éventuellement des paquets le suivant immédiatement et ayant été stockés avant lui, est transmis aux moyens de traduction binaire BTU (15). Lesdits moyens peuvent alors commencer la traduction binaire. En effet, la plupart des fichiers binaires de programmes ont une structure de données dont le traitement quel qu'il soit nécessite une phase de décodage qui s'effectue de manière continue du début jusqu'à la fin du fichier, les informations présentes au début du fichier décrivant la suite du fichier. Parmi les principaux formats de fichiers binaires de programmes possédant une telle structure de données, on peut citer les formats ELF, COFF, IEEE695 ou encore Intel OMF.

De tels fichiers binaires de programmes sont divisés en plusieurs sections. La première section contient des informations générales sur le fichier, telles qu'un nombre magique permettant d'identifier le type de format binaire, la version et le type du fichier, sa date de création, ou la taille du fichier. Elle contient également des informations sur les sections suivantes comme, par exemple, le nombre de sections, leur décalage ou offset à partir du début du fichier. Ainsi, à partir de la lecture des premiers paquets de transmission, les moyens de traduction binaire sont aptes à préparer la réception de la suite du fichier binaire de programme, notamment en allouant les espaces mémoires nécessaires, et à construire les structures de données dudit fichier. Les sections suivantes contiennent du code et des données variables. Ainsi, lorsque d'autres groupes de paquets sont reçus, les moyens de traduction binaire lisent le contenu d'autres sections, et détectent à l'intérieur de ces sections des portions de code. Lorsque ces portions de code sont identifiées, les moyens de traduction binaire préparent les structures de données qui leur sont associées. Dès que le début du code est disponible, les moyens de traduction binaire comprennent une unité de traduction statique apte à commencer une traduction statique des portions de code. Les moyens de traduction binaire comprennent également une unité de traduction dynamique apte à commencer une traduction dynamique aussitôt qu'un point de départ d'exécution a été identifié à l'intérieur du code.

Dans une troisième étape (23), les instructions qui ont été traduites sont envoyées à un processeur CPU (16) de la plate-forme cible en vue de leur exécution. Dans le mode de réalisation préféré, l'exécution du fichier binaire de programme a également lieu au fur et à mesure que ledit fichier est traduit. Après qu'un ensemble d'instructions traduites a été exécuté, il peut parfois se produire un certain délai avant qu'un nouvel ensemble d'instructions traduites ne soit exécuté, ce délai étant visible sur la Fig. 2. Ledit délai peut provenir du fait que les moyens de traduction binaire sont en train de traduire l'ensemble suivant d'instructions ou sont en attente de portions de code à traduire.

Il est possible de mettre en oeuvre le procédé de traitement de fichiers binaires de programmes dans un circuit intégré à l'aide de moyens matériels ou logiciels. Dans le second cas, un programme d'ordinateur contenu dans une mémoire de programmation peut provoquer le circuit à effectuer différentes étapes du procédé de traitement de fichiers binaires de programmes précédemment décrit. Le programme d'ordinateur peut aussi être chargé dans la mémoire de programmation par la lecture d'un support de données comme, par exemple un disque qui contient le programme d'ordinateur. La lecture peut également s'effectuer par l'intermédiaire d'un réseau de communication comme, par exemple, le réseau internet. Dans ce cas, un fournisseur de service mettra le programme d'ordinateur à la disposition des intéressés.

Aucun signe de référence entre parenthèses dans le présent texte ne doit être interprété de façon limitative. Le verbe "comprendre" et ses conjugaisons doivent également être interprétés de façon large, c'est à dire comme n'excluant pas la présence non seulement d'autres éléments ou étapes que ceux listés après ledit verbe, mais aussi d'une pluralité d'éléments ou d'étapes déjà listés après ledit verbe et précédés du mot "un" ou "une".

## Revendications

1. Procédé de traitement de fichiers binaires de programme, les dits fichiers binaires ayant une structure de données comportant une première section en début du fichier contenant des informations sur les sections suivantes et des sections suivantes contenant du code et des données variable comprenant une étape de transfert (21) d'un fichier binaire de programme (11) sous la forme de paquets (24) de données binaires sur un réseau de communication (13) entre un dispositif d'émission (12) d'une plate-forme serveur (10) et un dispositif de déception (14) d'une plate-forme cible (18), une étape de ré-ordonnancement des paquets, apte à former des groupes de paquets réordonnés (25),
**caractérisé en ce qu'**il comprend en outre une étape de traduction binaire (22), les étapes de transfert, de ré-ordonnancement et de traduction binaire s'effectuant en parallèle_{;}
la dite étape de traduction binaire comprenant:
- une sous-étape de lecture du premier groupe de parquets réordonnés sans attendre la fin du transfert;
- une sous-étape d'analyse du dit premier groupe de paquets réordonnés de manière à identifier la première section du fichier binaire de programme;
- une sous-étape de préparation pour recevoir les autres groupes de paquets réordonnés non encore transmis, la préparation étant d'allouer les espaces mémoires nécessaires à la réception des futurs groupes de paquets et de construire les structures de données du dit fichier binaire;
- une sous-étape de lecture des autres groupes de paquets réordonnés lorsque les dit groupes de paquets sont reçus;
- une sous-étape pour analyser successivement les dits groupes de paquets réordonnés de manière à identifier les sections suivantes du fichier binaire et à détecteur des portions de code à l'intérieur des dites sections suivantes;
et
- une sous-étape de préparation des structures de données associées aux dites portions de code.

2. Procédé de traitement de fichiers binaires de programmes selon la revendication 1,
**caractérisé en ce que** l'étape de traduction binaire (22) est apte à traduire une portion de code compilé pour une plate-forme source en une portion de code complié pour la flate-forme cible (18).

3. Procédé de traitement de fichiers binaires de programmes selon la revendication 2,
**caractérisé en ce que** le procédé comprend en outre une sous-étape d'exécution (23) de la portion de code aussitôt qu'elle a été traduite.

4. Dispositif (18) de traitement de données apte à recevoir des fichiers binaires de programme émis sur un réseau de communication (13) sous la forme de paquets (24) de données binaires par un dispositif d'émission (12) d'une plate-forme serveur (10), les dits fichiers fichier binaires ayant une structure de données comportant une première section en début du fichier contenant des informations sur les sections suivantes et des sections suivantes contenant du code et des données variable, ledit dispositif de traitement de données comprenant - des moyens de stockage de paquets de données (14), - des moyens de ré-ordonnancement des paquets, aptes à former des groupes de paquets réordonnés (25),
**caractérisé en ce que** ledit dispositif de traitement de données comprend des moyens de traduction binaire (15), les moyens de stockage, de réordonnancement et de traitement étant destinés à fonctionner en parallèle,
les dits moyens de traduction binaire étant apte à lire le premier groupe de paquets réordonnés sans attendre la fin du transfert, à analyser le dit premier groupe de paquets réordonnés de manière à identifier la première section du fichier binaire de programme transmis, à préparer la réception des autres groupes de paquets réordonnés non encore transmis, la préparation étant d'allouer les espaces mémoires nécessaires à la réception des futurs groupes de paquets et de construire les structures de données du dit fichier binaire, à lire les autres groupes de paquets réordonnés lorsque les dit groupes de paquets sont reçus, à analyser successivement les dits groupes de paquets réordonnés de manière à identifier les sections suivantes du fichier binaire et à détecter des portions de code à l'intérieur des dites sections suivantes et à prépares les structures de données associées aux dites portions de code.

5. Dispositif (18) de traitement de données selon la revendication 4, **caractérisé en ce que** les moyens de traduction binaire (15) sont apte à traduire une portion de code compilé pour une plate-forme source en une portion de code compilé pour la plate-forme cible (18).

6. Dispositif (18) de traitement de données selon la revendication 5, **caractérisé en ce que** le dispositif comprend en outre un processeur (16), apte à exécuter la portion de code aussitôt qu'elle a été traduite.

7. Produit "programme d'ordinateur" notamment pour récepteur-décodeur de télévision numérique comprenant un jeu d'instructions qui, lorsqu'elles sont chargées dans un circuit de traitement de données dudit récepteur-décodeur de télévision numérique, amène ledit circuit à effectuer le procédé de traitement de fichiers binaires de programmes selon l'une des revendications 1 à 3.

## Claims

1. A method for processing binary program files, said binary files having a data structure comprising a first section at the beginning of the file including information about the next sections and following sections containing code and variable data, comprising a step (21) of transferring a binary program file (11) as binary data packets (24) on a communication network (13) from a server platform (10) transmitter device (12) to a target platform (18) receiver device (14), a step of reordering packets, adapted to set groups of reordered packets (25), **characterized in that** method further comprises a binary translation step (22), the transfer, reordering and binary translation steps being parallel processed, the said binary translation step comprising :
- a sub-step for reading the first reordered packet group without waiting for the end of transfer ;
- a sub-step for scanning said first reordered packet group to identify the first section of the binary program file ;
- a sub-step for preparing the non transmitted yet reordered packet other groups reception, preparation consisting in allocating the memory locations necessary to receive the next packet groups and building the data structures of the said binary file ;
- a sub-step for reading the other reordered packet groups when said packet groups are received ;
- a sub-step for successively scanning the said reordered packet groups to identify the next binary file and detect code parts within said next sections ;
and
- a sub-step for preparing data structures related to said code parts.

2. A method for processing binary program files according to claim 1, **characterized in that** the binary translation step (22) is able to translate a compiled code part for a source platform into a compiled code part for the target platform (18).

3. A method for processing binary program files according to claim 2, **characterized in that** the method further comprises a sub-step (23) for executing immediately the code part after its translation.

4. A data processing device (18) adapted to receive binary program files transmitted on a communication network (13) as binary data packets (24) by means of a transmitter device (12) in a server platform (10), said binary files having a data structure including, at the beginning of the file, a first section which contains information's about the next sections and next sections including code and variable data, said data processing device comprising packet data storage means (14), packet reordering means adapted to set reordered packet groups (25),
**characterized in that** said data processing device includes binary translation means (15), the storage, reordering and processing means being designed to parallel operate,
said binary translating means being able to read the first reordered packet group without waiting for the transfer end, to scan said first reordered packet group in order to identify the first transmitted program binary file section, to prepare receiving the reordered packet groups not transmitted yet, the preparation being intended to allocate memory locations needed to receive next packet groups and constructing the said data structures in said binary file, reading the other reordered packet groups after receiving the said packet groups, scanning said reordered packet groups successively in order to identify the binary file next sections and detect code parts within said next sections and prepare the data structures related to said code parts.

5. A data processing device (18) according to claim 4, **characterized in that** the binary translating means (15) are adapted to translate a compiled code part intended for a source platform into a compiled code part for the target platform (18).

6. A data processing device (18) according to claim 4, **characterized in that** the device further comprises a processor (16) adapted to perform a code part immediately after its translation.

7. A "computer program" product especially intended for a receiver-decoder in digital TV comprising an instruction set that when loaded in a digital TV data processing circuit, causes said circuit to perform the processing method of binary program files according to one of the claims 1-3.

## Patentansprüche

1. Verfahren zur Bearbeitung binärer Programmdateien, wobei die binären Dateien eine Datenstruktur haben, die am Anfang der Datei einen ersten Abschnitt, der Informationen über die folgenden Abschnitte enthält, und folgende Abschnitte, die Code und variable Daten enthalten, umfasst, wobei das Verfahren einen Schritt (21) zum Übertragen einer binären Programmdatei (11) in Form von Paketen (24) binärer Daten über ein Kommunikationsnetz (13) zwischen einer Sendevorrichtung (12) einer Server-Plattform (10) und einer Empfangsvorrichtung (14) einer Ziel-Plattform (18) sowie einen Schritt zum Umordnen der Pakete, der geeignet ist, Gruppen umgeordneter Pakete (25) zu bilden, umfasst, **dadurch gekennzeichnet, dass** es außerdem einen Schritt (22) zum binären Übersetzen umfasst, wobei die Schritte zum Übertragen, Umordnen und binären Übersetzen parallel ausgeführt werden,
wobei der Schritt zum binären Übersetzen umfasst:
- einen Unterschritt zum Lesen der ersten Gruppe umgeordneter Pakete, ohne das Ende der Übertragung abzuwarten;
- einen Unterschritt zum Analysieren der ersten Gruppe umgeordneter Paket, derart, dass der erste Abschnitt der binären Programmdatei identifiziert wird;
- einen Unterschritt zum Vorbereiten, um die anderen Gruppen umgeordneter Pakete, die noch nicht übertragen worden sind, zu empfangen, wobei die Vorbereitung darin besteht, Speicherplätze, die für den Empfang künftiger Gruppen von Paketen notwendig sind, zuzuweisen und die Datenstrukturen der binären Datei zu konstruieren;
- einen Unterschritt zum Lesen der anderen Gruppen umgeordneter Pakete, wenn die Gruppen von Paketen empfangen worden sind;
- einen Unterschritt zum aufeinander folgenden Analysieren der Gruppen umgeordneter Pakete, derart, dass die folgenden Abschnitte der binären Datei identifiziert werden und Teile von Code innerhalb dieser folgenden Abschnitte erfasst werden; und
- einen Unterschritt zum Vorbereiten von Datenstrukturen, die diesen Codeteilen zugeordnet sind.

2. Verfahren zur Bearbeitung binärer Programmdateien nach Anspruch 1, **dadurch gekennzeichnet, dass** der Schritt (22) zum binären Übersetzen geeignet ist, einen für eine Quell-Plattform kompilierten Codeteil in einen für die Ziel-Plattform (18) kompilierten Codeteil zu übersetzen.

3. Verfahren zur Bearbeitung von binären Programmdateien nach Anspruch 2, **dadurch gekennzeichnet, dass** das Verfahren außerdem einen Unterschritt (23) zum Ausführen des Codeteils, sobald er übersetzt worden ist, umfasst.

4. Datenverarbeitungsvorrichtung (18), die binäre Programmdateien empfangen kann, die durch eine Sendevorrichtung (12) einer Server-Plattform (10) über ein Kommunikationsnetz (13) in Form von Paketen (24) binärer Daten gesendet werden, wobei die binären Dateien eine Datenstruktur haben, die am Anfang der Datei einen ersten Abschnitt, der Informationen über die folgenden Abschnitte enthält, und folgende Abschnitte, die Code und variable Daten enthalten, umfasst, wobei die Datenverarbeitungsvorrichtung Mittel (14) zum Speichern von Datenpaketen sowie Mittel zum Umordnen der Pakete, die geeignet sind, Gruppen (25) umgeordneter Pakete zu bilden, umfasst,
**dadurch gekennzeichnet, dass** die Datenverarbeitungsvorrichtung Mittel (15) zum binären Übersetzen umfasst, wobei die Speichermittel, die Umordnungsmittel und die Verarbeitungsmittel dazu vorgesehen sind, parallel zu arbeiten,
wobei die Mittel zum binären Übersetzen geeignet sind, die erste Gruppe umgeordneter Pakete zu lesen, ohne das Ende der Übertragung abzuwarten, die erste Gruppe umgeordneter Pakete zu analysieren, derart, dass der erste Abschnitt der übertragenen binären Programmdatei identifiziert wird, den Empfang der anderen Gruppen umgeordneter Pakete, die noch nicht übertragen worden sind, vorzubereiten, wobei die Vorbereitung darin besteht, Speicherplätze, die für den Empfang künftiger Gruppen von Paketen notwendig sind, zuzuweisen und die Datenstrukturen der binären Datei zu konstruieren, die anderen Gruppen umgeordneter Pakete zu lesen, wenn die Gruppen von Paketen empfangen worden sind, die Gruppen umgeordneter Pakete nacheinander zu analysieren, derart, dass die folgenden Abschnitte der binären Datei identifiziert werden und Codeteile innerhalb der folgenden Abschnitte erfasst werden, und die Datenstrukturen, die diesen Codeteilen zugeordnet sind, vorzubereiten.

5. Datenverarbeitungsvorrichtung (18) nach Anspruch 4, **dadurch gekennzeichnet, dass** die Mittel (15) zum binären Übersetzen geeignet sind, einen für eine Quell-Plattform kompilierten Codeteil in einen für die Ziel-Plattform (18) kompilierten Codeteil zu übersetzen.

6. Datenverarbeitungsvorrichtung (18) nach Anspruch 5, **dadurch gekennzeichnet, dass** die Vorrichtung außerdem einen Prozessor (16) umfasst, der geeignet ist, den Codeteil auszuführen, sobald er übersetzt worden ist.

7. Computerprogramm-Produkt, insbesondere für einen digitalen Fernsehempfänger und -decoder, das einen Satz von Befehlen enthält, die, wenn sie in eine Datenverarbeitungsschaltung des digitalen Fernsehempfängers und -decoders geladen werden, die Schaltung anweisen, das Verfahren zur Bearbeitung binärer Programmdateien nach einem der Ansprüche 1 bis 3 auszuführen.
